# EUROPÄISCHE PATENTSCHRIFT

(11) **EP 2 998 453 B1**
(45) Veröffentlichungstag und Bekanntmachung des Hinweises auf die Patenterteilung: **03.05.2017**
(21) Anmeldenummer: 14182159.5
(22) Anmeldetag: 25.08.2014
(51) Int. Cl.: E04B 1/74, C08J 9/00, C08J 9/224, C08J 9/232, C08J 9/236, C08J 9/40

(54) **Verfahren zur Herstellung eines Schall- und/oder Wärmedämmelements sowie Schall- und/oder Wärmedämmelement**
Method for producing a noise and/or heat insulation element and noise and/or heat insulation element
Procédé de fabrication d'un élément d'isolation thermique et/ou phonique et élément d'isolation thermique et/ou phonique

(43) Veröffentlichungstag der Anmeldung: 23.03.2016
(73) Patentinhaber: STO SE & Co. KGaA, 79780 Stühlingen (DE)
(72) Erfinder: Weier, Andreas, 78647 Trossingen (DE); Hitzler, Martin, 78244 Gottmadingen (DE); Kohler, Eva, 79777 Ühlingen-Birkendorf (DE); Leingruber, Silke, 78176 Blumberg (DE)
(74) Vertreter: Gottschalk, Matthias

(56) Entgegenhaltungen:
- EP-A1- 2 527 124
- WO-A1-2008/130132
- US-A- 4 198 485
- US-A- 4 447 491

## Beschreibung

Die Erfindung betrifft ein Verfahren zur Herstellung eines Schall- und/oder Wärmedämmelements aus einem flammgeschützten Polymer-Partikelschaum. Ferner betrifft die Erfindung ein Schall- und/oder Wärmedämmelement aus einem flammgeschützten Polymer-Partikelschaum.

### Stand der Technik

Bei der Schall- und/oder Wärmedämmung von Gebäudewänden oder -decken finden häufig Dämmelemente aus einem Polymer-Partikelschaum, insbesondere Polystyrol-Partikelschaum, Einsatz. Diese weisen zum Einen gute Wärmedämmeigenschaften auf und sind zum Anderen relativ kostengünstig herstellbar. Zudem sind sie auf der Baustelle einfach zu handhaben, da sie formstabil und wasserunempfindlich sind. Als nachteilig erweist sich jedoch das Brandverhalten derartiger Dämmelemente, so dass sie in der Regel der Baustoffklasse B (brennbare Baustoffe) gemäß DIN 4102-1 zugeordnet werden. Im Brandfall besteht insbesondere die Gefahr, dass das Material der Dämmelemente schmilzt, als heiße Schmelze abtropft und auf diese Weise zu einer Brandausweitung beiträgt.

Um das Brandverhalten derartiger Baustoffe zu verbessern, sind aus dem Stand der Technik bereits flammgeschützte Dämmelemente aus einem Polymer-Partikelschaum bekannt, d. h. solche, die mit mindestens einem Flammschutzmittel ausgerüstet sind. Um schwerentflammbare Polymer-Partikelschäume zu erhalten, werden vorzugsweise halogenhaltige Flammschutzmittel, wie beispielsweise Hexabromcyclododecan (HBCD), zugegeben. Halogenhaltige Flammschutzmittel sind jedoch aufgrund ihrer toxikologischen Eigenschaften nicht ganz unbedenklich.

Aus der DE 10 2008 038 916 A1 ist daher ein Verfahren zur Herstellung eines Partikelschaumstoffs bekannt, bei dem expandierbare Styrolpolymere zunächst mit einem halogenfreien Flammschutzmittel und einem organischen Bindemittel beschichtet und anschließend zu Formteilen versintert werden. Zur Beschichtung der expandierbaren Styrolpolymere können übliche Verfahren, wie Besprühen, Tauchen oder Benetzen der expandierbaren Styrolpolymere mit einer Polymerlösung oder einer wässrigen Polymerdispersion eingesetzt werden. Die hierbei verwendete Beschichtungszusammensetzung kann darüber hinaus weitere Additive, wie anorganische Füllstoffe, Pigmente oder IR-Absorber, enthalten. Nach dem Trocknen der Beschichtungszusammensetzung können die beschichteten expandierbaren Styrolpolymere in üblichen Formen mit Heißluft oder Wasserdampf zu Schaumstoffformkörpern versintert werden. In Abhängigkeit von der jeweils zugegebenen Menge eines Flammschutzmittels soll der derart hergestellte Schaumstoffformkörper in die Baustoffklasse B1 bzw. A2 gemäß DIN 4102, bzw. der Euroklassen A2, B und C gemäß der europäischen Brandschutzklassifizierung DIN EN 13501-1 eingestuft werden können.

Die in der DE 10 2008 038 916 A1 vorgeschlagene Beschichtung der expandierbaren Styrolpolymerisate mit einem halogenfreien Flammschutzmittel und einem organischen Bindemittel soll ferner den Effekt haben, dass die Verschweißung der Styrolpolymerisate durch Anwesenheit des organischen Bindemittels in der Beschichtung erleichtert wird. Neben der Verschweißung der Schaumstoffpartikel wird ferner eine Verklebung über die Polymerbeschichtung erreicht, so dass die Zwickel zwischen den Schaumstoffpartikeln verschwinden. Das heißt, dass sich das bei der Verschweißung verbleibende Zwickelvolumen vollständig mit der erweichten Polymerbeschichtung füllt. Die daraus resultierende erhöhte Dichte führt zwar zu einer Verbesserung der mechanischen Stabilität des Schaumstoffformkörpers, zugleich verschlechtern sich jedoch dessen Wärmedämmeigenschaften.

Aus der EP 2 527 124 A1 ist ferner ein Verfahren zur Herstellung eines eine Hohlraumstruktur aufweisenden Formkörpers zur Schall- und/oder Wärmedämmung bekannt, bei dem vorgeschäumte Polystyrolpartikel in einer Form oder auf einer Bandanlage verdichtet werden. Das die Hohlraumstruktur ausbildende Hohlraumvolumen wird dabei im Wesentlichen durch ein zwischen den einzelnen Polystyrolpartikeln verbleibendes, zusammenhängendes Zwickelvolumen gebildet. Zur Verbesserung der Brandschutzeigenschaften des Formkörpers wird in dieser Druckschrift vorgeschlagen, die vorgeschäumten Polystyrolpartikel vor dem Verdichten mit einem organischen oder anorganischen Bindemittel zu beschichten, das ein Flammschutzmittel enthält.

Brandversuche mit bekannten flammgeschützten Polymer-Partikelschaumstoffen haben ergeben, dass im Hinblick auf den Brandschutz noch Optimierungsbedarf besteht. Denn zum Einen wurde festgestellt, dass bei Einsatz intumeszierender Flammschutzmittel, wie beispielsweise Blähgraphit, das Flammschutzmittel eine gewisse Reaktionszeit benötigt, um seine Schutzwirkung zu entfalten. Während dieser Reaktionszeit besteht kein Flammschutz. Zum Anderen zeigte sich, dass die mechanische Stabilität des flammgeschützten Polymer-Partikelschaums während des Abbrandes unzureichend ist. Denn das intumeszierende Flammschutzmittel entfaltet keine oder zumindest keine ausreichende Bindekraft, um zu verhindern, dass Stücke abbrechen und herunterfallen. An den Abbruchstellen werden darüber hinaus weitere Oberflächen freigelegt, die sich entzünden können.

Aus der WO 2008/130132 A1 ist ferner ein Verfahren zur Herstellung einer flammgeschützten Platte aus einem Polystyrol-Partikelschaum bekannt, bei dem der Flammschutz durch Injektion einer ein anorganisches Material enthaltenen Lösung in bereits vorhandene Poren sowie in nachträglich hergestellte Öffnungen der Platte bewirkt wird. Im Brandfall bildet das in die Poren und Öffnungen eingelagerte anorganische Material eine wabenähnliche Struktur aus, die ein Eindringen der Flammen in die Platte verhindern soll. Die nachträglich eingebrachten Öffnungen sollen sicherstellen, dass anorganisches Material in ausreichender Menge und gleichmäßig verteilt in der Platte vorhanden ist.

Der vorliegenden Erfindung liegt die Aufgabe zugrunde, ein Verfahren zur Herstellung eines Schall- und/oder Wärmedämmelementes aus einem flammgeschützten Polymer-Partikelschaum sowie ein Schall- und/oder Wärmedämmelement aus einem flammgeschützten Polymer-Partikelschaum anzugeben, das aus Brandschutzsicht ein verbessertes Brandschutzverhalten und zugleich hervorragende Schall- und/oder Wärmedämmeigenschaften besitzt.

Zur Lösung der Aufgabe werden das Verfahren mit den Merkmalen des Anspruchs 1 und sowie das Schall- und/oder Wärmedämmelement mit den Merkmalen des Anspruchs 13 vorgeschlagen. Vorteilhafte Weiterbildungen der Erfindung sind den jeweiligen Unteransprüchen zu entnehmen.

### Offenbarung der Erfindung

Das zur Herstellung des Schall- und/oder Wärmedämmelements vorgeschlagene Verfahren umfasst erfindungsgemäß die folgenden Schritte:
a) Herstellen eines flammgeschützten Polymer-Partikelschaumkörpers unter Verwendung schäumbarer und/oder vorgeschäumter Polymer-Partikel, wobei die schäumbaren und/oder vorgeschäumten Polymer-Partikel vor einem Endschäumprozess zumindest teilweise mit einem organischen Bindemittel und einem Flammschutzmittel beschichtet werden und das organische Bindemittel durch Zugabe von Feuchtigkeit und/oder Wärme aktiviert wird, so dass ein die Polymer-Partikel zumindest teilweise umhüllender Bindemittelfilm ausgebildet wird, der zum Einen das Flammschutzmittel an die Polymer-Partikel bindet und zum Anderen die Expansion der Polymer-Partikel während des Endschäumprozesses verringert, so dass ein zusammenhängendes luftgefülltes Zwickelvolumen ausgebildet wird,
b) zumindest teilweises Beschichten der das Zwickelvolumen begrenzenden Oberflächen im Inneren des flammgeschützten Polymer-Partikelschaumkörpers mit einer ein anorganisches Bindemittel enthaltenden Beschichtungszusammensetzung.

Das vorgeschlagene Verfahren kann demnach in zwei wesentliche Verfahrensschritte unterteilt werden, nämlich der Herstellung eines flammgeschützten Polymer-Partikelschaumkörpers in Schritt a) und der Beschichtung zumindest eines Teils der das Zwickelvolumen begrenzenden Oberflächen in Schritt b). Dabei stellt Schritt a) eine Voraussetzung für Schritt b) dar. Denn eine nachträgliche Beschichtung der das Zwickelvolumen begrenzenden Oberflächen im Inneren des Polymer-Partikelschaumkörpers ist nur möglich, wenn das Zwickelvolumen ein zusammenhängendes Hohlraumvolumen ausbildet, so dass sichergestellt ist, dass die Beschichtungszusammensetzung in den Körper einzudringen vermag.

Um dies zu gewährleisten, werden in Schritt a) die schäumbaren und/oder vorgeschäumten Polymer-Partikel zunächst zumindest teilweise mit einem organischen Bindemittel und einem Flammschutzmittel beschichtet. Mit Aktivierung des organischen Bindemittels bildet dieses einen Film aus, der sich zumindest partiell um die einzelnen Polymer-Partikel legt. Über diesen zumindest partiellen Bindemittelfilm wird einerseits das Flammschutzmittel an die Polymer-Partikel gebunden, andererseits die Expansion der Polymer-Partikel während des Endschäumprozesses beschränkt. Die beschränkte Expansion wiederum führt zu einer unvollständigen Verschweißung der Polymer-Partikel, die jedoch dadurch kompensiert wird, dass die Polymer-Partikel über das Bindemittel zusätzlich verklebt werden. Der nach Schritt a) hergestellte Polymer-Partikelschaumkörper weist demnach eine ausreichend hohe mechanische Stabilität auf. Zudem verbleibt zwischen den verschweißten und verklebten Polymer-Partikeln ein zusammenhängendes luftgefülltes Hohlraumvolumen, über welches in Schritt b) die Beschichtungszusammensetzung in den Polymer-Partikelschaumkörper einbringbar ist.

Die Maßnahmen in Schritt a) stellen demnach vorbereitende Maßnahmen zur Durchführung des Schritts b) dar.

Zwar wird bereits in Schritt a) der Polymer-Partikelschaumkörper mit einem Flammschutzmittel ausgerüstet, die gewünschte Verbesserung des Brandverhaltens aus Brandschutzsicht wird jedoch erst durch die Maßnahmen in Schritt b) erreicht.

In Schritt b) werden die das Zwickelvolumen begrenzenden Oberflächen im Inneren des flammgeschützten Polymer-Partikelschaumkörpers mit einer ein anorganisches Bindemittel enthaltenden Beschichtungszusammensetzung zumindest teilweise beschichtet. Da das in der Beschichtungszusammensetzung enthaltene anorganische Bindemittel nicht brennbar ist, wird über die derart hergestellte Beschichtung ein zumindest anfänglicher Flammschutz erreicht, der eine gewisse Reaktionszeit des eigentlichen, in Schritt a) hinzugegebenen Flammschutzmittels zu überbrücken vermag. Darüber hinaus besitzt die Beschichtung eine den Polymer-Partikelschaumkörper im Brandfall stabilisierende Wirkung. Denn die Beschichtung bildet eine Art inneres Gerüst aus. Zudem verhindert die Bindekraft des in der Beschichtungszusammensetzung enthaltenen anorganischen Bindemittels, dass Brandreste abbrechen und abfallen. Das heißt ferner, dass den Flammen keine neuen Oberflächen geboten werden, die sich entzünden könnten.

Die in Schritt b) eingebrachte Beschichtungszusammensetzung führt demnach zu einer Beschichtung der das Zwickelvolumen begrenzenden Oberflächen, die sowohl eine Schutz- als auch Stabilisierungsfunktion besitzt.

Die hierzu in das Zwickelvolumen eingebrachte Beschichtungszusammensetzung soll dabei das Zwickelvolumen nicht ausfüllen, sondern lediglich auskleiden, so dass auch nach dem Beschichten ein zusammenhängendes luftgefülltes Hohlraumvolumen zwischen den Polymer-Partikeln erhalten bleibt. Denn dieses verbessert einerseits die Schalldämmeigenschaften eines nach dem erfindungsgemäßen Verfahren hergestellten Schall- und/oder Wärmedämmelements. Andererseits ist über das zusammenhängende Hohlraumvolumen eine gewisse Durchlässigkeit des Schall-und/oder Wärmedämmelements für Wasser und/oder Wasserdampf sichergestellt. Denn vorzugsweise ist ein nach dem erfindungsgemäßen Verfahren hergestelltes Schall- und/oder Wärmedämmelement zumindest wasserdampfdurchlässig bzw. diffusionsoffen. Bevorzugt beträgt die Diffusionswiderstandszahl µ eines nach dem erfindungsgemäßen Verfahren hergestellten Schall- und/oder Wärmedämmelements ≤ 50, vorzugsweise ≤ 20, weiterhin vorzugsweise ≤ 15.

Da die Durchführung des Schritts b) zu einer Erhöhung der Dichte sowie einer damit einhergehenden Verschlechterung der Wärmedämmeigenschaften des nach Schritt a) hergestellten flammgeschützten Polymer-Partikelschaumkörpers führt, wird gemäß einer bevorzugten Ausführungsform der Erfindung vorgeschlagen, dass die das Zwickelvolumen begrenzenden Oberflächen in Schritt b) nur teilweise beschichtet werden. Dadurch erhöht sich die Dichte nur geringfügig und die hervorragenden Wärmedämmeigenschaften des Ausgangsstoffs bleiben weitgehend erhalten.

Um eine nur teilweise Beschichtung der das Zwickelvolumen begrenzenden Oberflächen vorzunehmen, kann die Beschichtung lokal begrenzt werden. Beispielsweise kann die Beschichtungszusammensetzung nur bis zu einer bestimmten Tiefe in den Polymer-Partikelschaumkörper eingebracht werden. Da die tiefer liegenden Bereiche in der Regel im Brandfall der direkten Flammeneinwirkung entzogen sind, wirkt sich eine nur teilweise Beschichtung nicht negativ auf den Brandschutz aus.

Gemäß einer bevorzugten Ausführungsform der Erfindung wird daher vorgeschlagen, dass zumindest ein oberflächennaher Bereich in Bezug auf eine außen liegende Oberfläche bzw. Außenseite des Polymer-Partikelschaumkörpers mit der das anorganische Bindemittel enthaltenden Beschichtungszusammensetzung beschichtet wird. Bei der außen liegenden Oberfläche bzw. Außenseite des Polymer-Partikelschaumkörpers handelt es sich vorzugsweise um eine solche, die im Brandfall als erstes den Flammen ausgesetzt ist. Weiterhin vorzugsweise ist auch die außen liegende Oberfläche bzw. Außenseite mit dieser Beschichtungszusammensetzung beschichtet. Das Beschichten der außen liegenden Oberfläche bzw. Außenseite wird vorteilhafterweise gemeinsam mit dem Beschichten der das Zwickelvolumen begrenzenden innen liegenden Oberflächen in Schritt b) durchgeführt. Darüber hinaus können in Schritt b) oder einem nachfolgenden Schritt auch mehrere außen liegende Oberflächen des Polymer-Partikelschaumkörpers mit der Beschichtungszusammensetzung beschichtet werden.

Bevorzugt wird in Schritt b) eine Beschichtungszusammensetzung in Form einer Flüssigkeit, insbesondere in Form einer Lösung, einer Dispersion, einer Suspension oder einer Emulsion zum Beschichten verwendet. Das anorganische Bindemittel ist demzufolge in der Beschichtungszusammensetzung vorzugsweise gelöst, dispergiert, suspendiert oder emulgiert. Die flüssige Form der Beschichtungszusammensetzung erleichtert das Eindringen in den Polymer-Partikelschaumkörper und gewährleistet ferner eine gleichmäßige Benetzung der das Zwickelvolumen begrenzenden Oberflächen. Dabei gilt, je niedrigviskoser die Beschichtungszusammensetzung ist, desto leichter dringt diese in den Polymer-Partikelschaumkörper ein. Die Viskosität der Beschichtungszusammensetzung liegt vorzugsweise unter 1000 mP*s, weiterhin vorzugsweise unter 500 mP*s, idealerweise unter 100 mP*s.

Weiterhin bevorzugt wird in Schritt b) eine Beschichtungszusammensetzung zum Beschichten verwendet, die ein silikatisches Bindemittel, insbesondere Wasserglas, als anorganisches Bindemittel enthält. Silikatische Bindemittel sind nicht brennbar und zudem zur Herstellung einer niedrigviskosen Beschichtungszusammensetzung in Form einer Lösung, Dispersion, Suspension oder Emulsion geeignet. Wasserglas hat sich in Versuchen als ideales anorganisches Bindemittel erwiesen. Denn Wasserglas ist zum Einen leicht zu verarbeiten. Zum Anderen haben Brandtests gezeigt, dass die mechanische Stabilität der "Brandleiche" des Polymer-Partikelschaumkörpers deutlich verbessert wird, wenn Wasserglas als anorganisches Bindemittel verwendet wird.

Alternativ können zum zumindest teilweisen Beschichten der das Zwickelvolumen begrenzenden Oberflächen in Schritt b) auch Bindemittelmischungen eingesetzt werden, die neben dem anorganischen Bindemittel wenigstens ein weiteres anorganisches Bindemittel und/oder ein organisches Bindemittel enthalten.

Vorteilhafterweise wird in Schritt b) eine Beschichtungszusammensetzung zum Beschichten verwendet, die neben dem wenigstens einen anorganischen Bindemittel wenigstens ein Additiv, insbesondere ein Spreit-, Netz- und/oder Dispergiermittel, enthält.

Spreit-, Netz- und/oder Dispergiermittel setzen die Grenzflächenspannung zwischen einer Flüssigkeit und einem hierin enthaltenen Feststoff herab, so dass eine gleichmäßige Verteilung des Feststoffs in der Flüssigkeit bzw. in der Beschichtungszusammensetzung gewährleistet ist. Ferner kann durch den Einsatz von Spreit-, Netz- und/oder Dispergiermitteln die Oberflächenspannung der Beschichtungszusammensetzung herabgesetzt werden, so dass die Benetzung der zu beschichtenden Oberflächen verbessert wird. Durch die Zugabe entsprechender Additive kann somit eine gleichmäßige und zugleich dünnschichtige Beschichtung der zu beschichtenden Oberflächen erreicht werden.

Optional können auch andere und/oder weitere Additive zugegeben werden.

Zum Beispiel kann ein weiteres Flammschutzmittel als Additiv zugegeben werden. Hier eignen sich insbesondere pulverförmige Flammschutzmittel, wie beispielsweise Aluminiumhydroxid, Ettringit und/oder andere Hydrate, die in der Beschichtungszusammensetzung, gelöst, dispergiert suspendiert oder emulgiert werden. Über die Beschichtungszusammensetzung wird dann das weitere Flammschutzmittel in den Polymer-Partikelschaumkörper eingebracht und dort deponiert. Das weitere Flammschutzmittel bewirkt nochmals eine Verbesserung des Brandschutzes.

Alternativ oder ergänzend können der Beschichtungszusammensetzung Pigmente und/oder athermane Stoffe zugegeben werden, um in bekannter Weise die Wärmedämmeigenschaften eines nach diesem Verfahren hergestellten Schall-und/oder Wärmedämmelements zu verbessern. Als athermane Materialien eignen sich insbesondere Materialien wie Graphit oder Ruß, die eine dunkle Einfärbung bewirken und als IR-Trübungsmittel dienen. Durch die Zugabe von athermanen Materialien und/oder von Pigmenten kann zudem ein farbliches Absetzen der Beschichtungszusammensetzung bewirkt werden, um beispielsweise die Eindringtiefe der Beschichtungszusammensetzung in den Polymer-Partikelschaumkörper visuell besser erfassen zu können. Helle Pigmente, insbesondere Weißpigmente, können zudem als IR-Reflektoren eingesetzt werden, die eine zu starke Erwärmung bei direkter Sonneneinstrahlung verhindern und auf diese Weise einer unerwünschten Formveränderung des Schall- und/oder Wärmedämmelements während der Ausführung einer Fassadendämmung entgegen wirken.

Ferner besteht die Möglichkeit, weitere Füll- und/oder Feststoffe, beispielsweise silikatische und/oder oxidische Füllstoffe, zuzugeben. Als Füllstoffe eignen sich ferner Carbonate und/oder Sulfate. Durch die Zugabe mineralischer Füllstoffe kann die Brennbarkeit des Polymer-Partikelschaumkörpers weiter herabgesetzt werden.

Vorteilhafterweise beträgt der Gesamt-Feststoffgehalt < 60 Gew.-%, vorzugsweise < 40 Gew.-% und weiterhin vorzugsweise < 30 Gew.-% bezogen auf das Gesamtgewicht der Beschichtungszusammensetzung. Denn ein zu hoher Feststoffgehalt verschlechtert die Wärmedämmeigenschaften. Darüber hinaus wirkt sich ein zu hoher Feststoffgehalt negativ auf die Verarbeitungseigenschaften des Schall- und/oder Wärmedämmelements aus, da er sich - insbesondere beim Heißdrahtschneiden - schlechter schneiden lässt.

Ferner gilt es bei der Zugabe von Füll- und/oder Feststoffen auf die Größe der einzelnen Teilchen zu achten. Denn sind diese zu groß, besteht die Gefahr, dass sie sich in der Beschichtungszusammensetzung absetzen. Ferner können große Füll-und/oder Feststoffteilchen in den Zwischenräumen zwischen den Polymer-Partikeln hängen bleiben und somit das Zwickelvolumen verstopfen. Eine gleichmäßige Verteilung der Beschichtungszusammensetzung im Inneren des Polymer-Partikelschaumkörpers ist dann nicht mehr gewährleistet. Bevorzugt wird daher ein d90-Wert der Füll- und/oder Feststoffteilchen < 250 µm, vorzugsweise < 100 µm und weiterhin vorzugsweise < 50 µm vorgeschlagen.

Das Beschichten in Schritt b) wird erfindungsgemäß mittels Tränken, Tunken, Tauchen, Fluten, Begießen und/oder Besprühen des nach Schritt a) hergestellten flammgeschützten Polymer-Partikelschaumkörpers durchgeführt. Bei diesen Verfahren - mit Ausnahme des Flutens - kann auch eine lokal begrenzte Beschichtung der das Zwickelvolumen begrenzenden Oberflächen des Polymer-Partikelschaumkörpers vorgenommen werden. Vorzugsweise erfolgt das Beschichten zumindest zeitweise unter Druck oder bei Unterdruck. Beim Beschichten unter Druck, wird die Beschichtungszusammensetzung in das luftgefüllte Zwickelvolumen gedrückt, so dass diese die hierin ursprünglich vorhandene Luft verdrängt. Durch Anlegen eines Unterdrucks kann dem Zwickelvolumen ein Teil der hierin vorhandenen Luft entzogen werden, so dass im Wege des Druckausgleichs die Beschichtungszusammensetzung in das Zwickelvolumen hinein gezogenen wird.

Das in Schritt b) durchgeführte Beschichten kann bei Bedarf mehrfach wiederholt werden. Dabei können verschiedene Verfahren zum Einsatz gelangen. Das heißt, dass der nach Schritt a) hergestellte Polymer-Partikelschaumkörper mehrfach getränkt, getunkt, getaucht, geflutet, begossen und/oder besprüht werden kann.

Da die Beschichtungszusammensetzung bzw. die spätere Beschichtung das Zwickelvolumen lediglich auskleiden und nicht ausfüllen soll, so dass ein zusammenhängendes luftgefülltes Hohlraumvolumen erhalten bleibt, wird ferner vorgeschlagen, dass nach dem zumindest teilweise Beschichten der das Zwickelvolumen begrenzenden Oberflächen ein Teil der zum Beschichten eingesetzten Beschichtungszusammensetzung aus dem Zwickelvolumen wieder entfernt wird. Dies kann beispielsweise durch Abtropfen oder Abschleudern erfolgen. Unterstützend kann wiederum Druck oder Unterdruck eingesetzt werden.

Bei Herstellung des flammgeschützten Polymer-Partikelschaumkörpers in Schritt a) können insbesondere schäumbare und/oder vorgeschäumte Polymer-Partikel aus Polystyrol, Polylactid, Polyethylen und/oder Polypropylen verwendet werden. Sämtliche vorstehend genannte Polymere sind schäumbar, so dass diese einem Endschäumprozess unterzogen werden können. Ein aus entsprechenden Polymer-Partikeln hergestellter Partikelschaumkörper weist zudem hervorragende Wärmedämmeigenschaften auf.

Ferner bevorzugt wird bei der Herstellung des flammgeschützten Polymer-Partikelschaumkörpers in Schritt a) ein Dispersionspulver, insbesondere ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, als organisches Bindemittel zum Beschichten der schäumbaren und/oder vorgeschäumten Polymer-Partikel verwendet. Diese Bindemittel weisen eine hohe Bindkraft auf, um das Flammschutzmittel an die Polymer-Partikel zu binden. Dies wiederum ermöglicht es, den Anteil des organischen und damit brennbaren Bindemittels zu reduzieren, so dass sich dieser nicht negativ auf das Brandverhalten des Polymer-Partikelschaumkörpers auswirkt. Das in Schritt b) nachfolgende Beschichten mit einer zumindest ein anorganisches Bindemittel enthaltenden Beschichtungszusammensetzung führt ferner zur Ausbildung einer das organische Bindemittel zumindest teilweise abdeckenden Schutzschicht, so dass das organische Bindemittel keiner direkten Flammeneinwirkung ausgesetzt ist.

Um gute Wärmedämmeigenschaften des in Schritt a) herzustellenden Polymer-Partikelschaumkörpers zu gewährleisten, wird vorgeschlagen, dass der Gewichtsanteil der schäumbaren und/oder vorgeschäumten Polymer-Partikel bevorzugt 25 bis 99,5 Gew.-%, vorzugsweise 40 bis 99 Gew.-% und weiterhin vorzugsweise 50 bis 98,5 Gew.-% bezogen auf das Gesamtgewicht der Ausgangsstoffe beträgt. Der Gewichtsanteil des Bindemittels beträgt bevorzugt 0,5 bis 75 Gew.-%, vorzugsweise 1 bis 60 Gew.-% und weiterhin vorzugsweise 1,5 bis 50 Gew.-% bezogen auf das Gesamtgewicht der Ausgangsstoffe. Die Ausgangsstoffe beinhalten mindestens ein Flammschutzmittel zur flammgeschützten Ausrüstung des Polymer-Partikelschaumkörpers.

Als Flammschutzmittel eignen sich insbesondere solche, die intumeszierend sind, d. h. bei starker Hitze expandieren und auf diese Weise eine Brandausweitung verhindern. Bevorzugt wird daher in Schritt a) ein intumeszierendes Flammschutzmittel, beispielsweise Blähgraphit, zum Beschichten der schäumbaren und/oder vorgeschäumten Polymer-Partikel verwendet. Die eingangs genannten Nachteile von Blähgraphit (anfängliche Reaktionszeit, unzureichende Bindekraft zur Stabilisierung der Brandleiche) werden durch die "innere" Beschichtung des Polymer-Partikelschaumkörpers mit einer ein anorganisches Bindemittel enthaltenden Beschichtungszusammensetzung kompensiert, so dass vorliegend lediglich die Vorteile von Blähgraphit zum Tragen kommen.

Das Beschichten der schäumbaren und/oder vorgeschäumten Polymer-Partikel mit dem vorzugsweise pulverförmigen organischen Bindemittel und dem Flammschutzmittel in Schritt a) kann beispielsweise durch Mischen erfolgen. Um insbesondere die Haftung des pulverförmigen organischen Bindemittels an den Polymer-Partikeln zu verbessern, können feuchte oder angefeuchtete Polymer-Partikel verwendet werden.

Die in Schritt a) zur Aktivierung des Bindemittels erforderliche Feuchtigkeit und/oder Wärme wird bevorzugt bei einem Vor- oder Endschäumprozess, vorzugsweise in Form von Wasserdampf, zugegeben. Die Aktivierung des Bindemittels hat zur Folge, dass dieses erweicht und sich zumindest partiell als dünner Film um die Polymer-Partikel legt. Der Bindemittelfilm bindet das Flammschutzmittel an die Polymer-Partikel. Ferner bewirkt der Bindemittelfilm, dass die Expansion der Polymer-Partikel beim Endschäumen verringert wird und ein zusammenhängendes, luftgefülltes Zwickelvolumen zwischen den endgeschäumten Polymer-Partikeln verbleibt. Die Verbindung der Polymer-Partikel untereinander wird dabei sowohl durch Verschweißen, als auch durch Verkleben bewirkt, so dass ein stabiler Verbund gewährleistet ist. Die Verklebung über das organische Bindemittel setzt jedoch voraus, dass dieses beim Endschäumen noch aktiv bzw. aktivierbar ist. Wird die Aktivierung des organischen Bindemittels vor dem Endschäumprozess vorgenommen, ist daher sicherzustellen, dass das Endschäumen vor dem vollständigen Trocknen bzw. Aushärten des aktivierten organischen Bindemittels durchgeführt wird.

Zur Lösung der eingangs genannten Aufgabe wird ferner ein Schall- und/oder Wärmedämmelement aus einem flammgeschützten Polymer-Partikelschaum vorgeschlagen, das nach einem der vorstehend beschriebenen erfindungsgemäßen Verfahren hergestellt worden ist. Der Polymer-Partikelschaum weist zwischen verschweißten und verklebten Polymer-Partikeln ein zusammenhängendes luftgefülltes Zwickelvolumen auf, das von Oberflächen begrenzt wird, die zumindest teilweise mit einer ein anorganisches Bindemittel enthaltenden Beschichtungszusammensetzung beschichtet sind.

Das vorgeschlagene Schall- und/oder Wärmedämmelement zeichnet sich demnach durch ein zusammenhängendes luftgefülltes Zwickelvolumen und eine das Zwickelvolumen zumindest bereichsweise auskleidende Beschichtung aus.

Durch das zusammenhängende luftgefüllte Zwickelvolumen weist das Schall-und/oder Wärmedämmelement sehr gute Schalldämmeigenschaften auf. Darüber hinaus ist es wasserdampfdurchlässig. Die Wasserdampfdurchlässigkeit µ beträgt bevorzugt ≤ 50, vorzugsweise ≤ 20, weiterhin vorzugsweise ≤ 15.

Durch die das Zwickelvolumen zumindest bereichsweise auskleidende Beschichtung weist das Schall- und/oder Wärmedämmelement zudem ein aus Brandschutzsicht verbessertes Brandverhalten auf. Denn durch das enthaltene anorganische Bindemittel bildet die Beschichtung eine nicht brennbare Schutzschicht aus, welche die verschweißten und verklebten Polymer-Partikel vor direkter Flammeneinwirkung schützt, und zwar zumindest solange, bis ein im Polymer-Partikelschaum enthaltenes Flammschutzmittel reagiert. Ferner vermag die Beschichtung im Brandfall das Schall- und/oder Wärmedämmelement zu stabilisieren, so dass dieses nicht in Stücke zerfällt.

Die Verklebung der Polymer-Partikel untereinander setzt die Anwesenheit eines Bindemittels voraus. Hierbei handelt es sich vorzugsweise um ein organisches Bindemittel, das neben der Verklebung der Polymer-Partikel untereinander ferner der Einbindung eines Flammschutzmittels dient. Bei dem Flammschutzmittel kann es sich insbesondere um ein intumeszierendes Flammschutzmittel, wie beispielsweise Blähgraphit, handeln. Dieses expandiert unter Einwirkung von Hitze und bildet auf diese Weise eine Schutzschicht aus, die eine Brandausweitung unterbindet. Allerdings besitzen intumeszierende Flammschutzmittel eine anfängliche Reaktionszeit, die es zu überbrücken gilt. Bei dem erfindungsgemäßen Schall-und/oder Wärmedämmelement wird dies durch die das Zwickelvolumen zumindest bereichsweise auskleidende Beschichtung bewirkt.

Gemäß einer bevorzugten Ausführungsform der Erfindung sind die das Zwickelvolumen begrenzenden Oberflächen lediglich oberflächennah in Bezug auf wenigstens eine außen liegende Oberfläche des Schall- und/oder Wärmedämmelements mit der ein anorganisches Bindemittel enthaltenden Beschichtungszusammensetzung beschichtet. Bei der außen liegenden Oberfläche handelt es sich vorzugsweise um eine Oberfläche, die nach Anbringung des Schall-und/oder Wärmedämmelements an einer Gebäudewand oder -decke im Brandfall zuerst den Flammen ausgesetzt ist. Vorzugsweise ist diese Oberfläche ebenfalls mit der Beschichtungszusammensetzung beschichtet.

Durch eine lediglich oberflächennahe Beschichtung der das Zwickelvolumen begrenzenden Oberflächen in Bezug auf wenigstens eine außen liegende Oberfläche kann die Dichte des Schall- und/oder Wärmedämmelements vergleichsweise niedrig gehalten werden. Dies wiederum wirkt sich positiv auf die Wärmedämmeigenschaften des Dämmelements aus. Vorzugsweise liegt die Dichte des Schall- und/oder Wärmedämmelements bei 15 bis 50 kg/m³, weiterhin vorzugsweise bei 20 bis 45 kg/m³ und idealerweise bei 22 bis 40 kg/m³. Die Wärmeleitfähigkeit liegt bevorzugt bei 0,030 bis 0,040 W/(mK), besonders bevorzugt bei 0,030 bis 0,035 W/(mK).

Eine oberflächennahe Beschichtung der das Zwickelvolumen begrenzenden Oberflächen in Bezug auf wenigstens eine außen liegende Oberfläche des Schall-und/oder Wärmedämmelements kann beispielsweise durch Tunken oder Tauchen des flammgeschützten Polymer-Partikelschaums in eine ein anorganisches Bindemittel enthaltende Beschichtungszusammensetzung erreicht werden.

Vorteilhafterweise ist ferner wenigstens eine außen liegende Oberfläche des Schall-und/oder Wärmedämmelements ebenfalls mit der ein anorganisches Bindemittel enthaltenden Beschichtungszusammensetzung beschichtet. Idealerweise handelt es sich hierbei um die Oberfläche, die im Brandfall zuerst den Flammen ausgesetzt ist, wenn das Schall- und/oder Wärmedämmelement an einer Gebäudewand oder -decke angebracht ist. An diese Oberfläche angrenzende Oberflächen können ebenfalls ganz oder teilweise mit der Beschichtungszusammensetzung beschichtet sein.

Das erfindungsgemäße Verfahren sowie hiernach hergestellte Schall- und/oder Wärmedämmelemente werden nachfolgend anhand von konkreten Beispielen näher beschrieben, die anschließend zur Bestimmung des Brandverhaltens einem Brandtest unterzogen wurden.

### Beispiel 1

### Schritt a)

Herstellung eines flammgeschützten Polymer-Partikelschaumkörpers mit einem zusammenhängenden, luftgefüllten Zwickelvolumen:
Es wurden 65 Gew.-% schäumbare Polystyrol-Partikel mit 15 Gew.-% Dispersionspulver (Basis Ethylen und Vinylchlorid) und 20 Gew.-% Blähgraphit als Flammschutzmittel gemischt und unter Zugabe von Druck (1 bar) und Wärme (100°C), wobei Wasserdampf als Heizmedium diente, vorgeschäumt. Dabei erweichte das Dispersionspulver und bildete einen das Flammschutzmittel an die Polystyrol-Partikel bindenden Polymerfilm auf den vorgeschäumten PolystyrolPartikeln aus.

Neun Liter der mit dem organischen Bindemittel und dem Flammschutzmittel beschichteten und vorgeschäumten Polystyrol-Partikel wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

Der derart hergestellte flammgeschützte Polystyrol-Partikelschaumkörper wies eine Wärmeleitfähigkeit λ nach DIN EN 12667 von 0,0325 W/(mK) und eine Dichte ρ nach DIN EN 1602 von 29,0 kg/m³ auf.

### Schritt b)

Beschichten zumindest eines Teils der das Zwickelvolumen begrenzenden Oberflächen sowie wenigstens einer außenliegenden Oberfläche des Polymer-Partikelschaumkörpers mit einer ein anorganisches Bindemittel enthaltenden Beschichtungszusammensetzung:
Das Beschichten wurde mittels Tränken bewirkt. Die Tränkflüssigkeit enthielt 98,9 Gew.-% Wasserglas (30 Gew.-% Feststoffgehalt) und 1,1 Gew.-% eines Netzmittels.

Die Viskosität der Tränkflüssigkeit betrug unter 40 mP*s. Zunächst wurde die Tränkflüssigkeit angerührt und in eine Wanne gepumpt, in welche zuvor der zu beschichtende Polystyrol-Partikelschaumkörper eingelegt wurde. Die Wanne wurde soweit mit der Tränkflüssigkeit gefüllt, dass der Polystyrol-Partikelschaumkörper vollständig in der Tränkflüssigkeit untergetaucht werden konnte. Anschließend wurde der Polystyrol-Partikelschaumkörper aus der Wanne entnommen und zum Abtropfen aufgestellt, so dass überschüssige Tränkflüssigkeit aus dem Zwickelvolumen entweichen und die verbleibende Flüssigkeit trocknen konnte.

Der Polystyrol-Partikelschaumkörper wies nach dem Beschichten eine Wärmeleitfähigkeit λ nach DIN EN 12667 von 0,0350 W/(mK), eine Dichte ρ nach DIN EN 1602 von 41,1 kg/m³ und eine Diffusionswiderstandszahl µ nach DIN EN ISO 7783: 2011 von 12 auf.

Die Stabilität des Körpers bei Durchführung des Brandtests wurde mit gut bis sehr gut bewertet. Das mit unter Flammeneinwirkung intumeszierende Flammschutzmittel versetzte Polystyrol blieb als stabile Schicht bestehen. Es trat kein brennendes Abfallen oder Abtropfen auf. Im Kleinbrennerkasten nach DIN EN ISO 11925 wurden die Kriterien der Brandklassen E und D erfüllt.

### Beispiel 2

### Schritt a)

### Wie in Beispiel 1

### Schritt b)

Das Beschichten wurde - wie in Beispiel 1 - mittels Tränken bewirkt. Allein die Zusammensetzung der Tränkflüssigkeit wurde geändert. Diesmal enthielt die Tränkflüssigkeit 22,5 Gew.-% Wasser, 55,5 Gew.-% Wasserglas (30 Gew.-% Feststoffgehalt), 20 Gew.-% Aluminiumhydroxid und 2 Gew.-% Netzmittel.

Die Viskosität der Tränkflüssigkeit betrug unter 50 mP*s.

Der Polystyrol-Partikelschaumkörper wies nach dem Beschichten eine Wärmeleitfähigkeit λ nach DIN EN 12667 von 0,0371 W/(mK), eine Dichte ρ nach DIN EN 1602 von 43,2 kg/m³ und eine Diffusionswiderstandszahl µ nach DIN EN ISO 7783: 2011 von 14 auf.

Die Stabilität des Körpers bei Durchführung des Brandtests wurde auch hier mit gut bis sehr gut bewertet. Das mit unter Flammeneinwirkung intumeszierende Flammschutzmittel versetzte Polystyrol blieb als stabile Schicht bestehen. Es trat kein brennendes Abfallen oder Abtropfen auf. Im Kleinbrennerkasten nach DIN EN ISO 11925 wurden die Kriterien der Brandklassen E und D erfüllt.

### Beispiel 3

### Schritt a)

Herstellung eines flammgeschützten Polymer-Partikelschaumkörpers mit einem zusammenhängenden, luftgefüllten Zwickelvolumen:
Es wurden 60 Gew.-% schäumbare Polystyrol-Partikel mit 15 Gew.-% Dispersionspulver (Basis Ethylen und Vinylchlorid) und 25 Gew.-% Blähgraphit als Flammschutzmittel gemischt und unter Zugabe von Druck (1 bar) und Wärme (100°C), wobei Wasserdampf als Heizmedium diente, vorgeschäumt. Dabei erweichte das Dispersionspulver und bildete einen das Flammschutzmittel an die Polystyrol-Partikel bindenden Polymerfilm auf den vorgeschäumten PolystyrolPartikeln aus.

Neun Liter der mit dem organischen Bindemittel und dem Flammschutzmittel beschichteten und vorgeschäumten Polystyrol-Partikel wurden in eine Form mit den Abmessungen 30 cm x 30 cm x 10 cm gegeben und unter Druck (1 bar) und Wärme (100°C) endgeschäumt, wobei wiederum Wasserdampf als Heizmedium diente. Nach dem Druckabbau wurde das Formteil aus der Form entnommen und über einen Zeitraum von einer Woche bei Raumtemperatur getrocknet.

Der derart hergestellte flammgeschützte Polystyrol-Partikelschaumkörper wies eine Wärmeleitfähigkeit λ nach DIN EN 12667 von 0,0334 W/(mK) und eine Dichte ρ nach DIN EN 1602 von 29,6 kg/m³ auf.

### Schritt b)

Beschichten zumindest eines Teils der das Zwickelvolumen begrenzenden Oberflächen sowie wenigstens einer außenliegenden Oberfläche des Polymer-Partikelschaumkörpers mit einer ein anorganisches Bindemittel enthaltenden Beschichtungszusammensetzung:
Das Beschichten wurde mittels Eintauchen der Prüfkörpers in die Beschichtungszusammensetzung bewirkt. Dabei wurde der Prüfkörper nur teilweise eingetaucht. Die Beschichtungszusammensetzung enthielt 98,0 Gew.-% Wasserglas (30 Gew.-% Feststoffgehalt) und 2 Gew.-% Netzmittel.

Die Viskosität der Beschichtungszusammensetzung betrug unter 40 mP*s.

Zunächst wurde die Beschichtungszusammensetzung angerührt und in eine Wanne gepumpt. Dann wurde der Polystyrol-Prüfkörper über eine Fläche mit den Abmessungen 30 cm x 30 cm bis zu einer Tiefe von 3 cm in die Beschichtungszusammensetzung eingetaucht. Anschließend wurde der Polystyrol-Partikelschaumkörper aus der Wanne entnommen und zum Abtropfen und Trocknen aufgestellt.

Der Polystyrol-Partikelschaumkörper wies nach dem Beschichten eine Wärmeleitfähigkeit λ nach DIN EN 12667 von 0,0343 W/(mK), eine Dichte ρ nach DIN EN 1602 von 35,6 kg/m³ und eine Diffusionswiderstandszahl µ nach DIN EN ISO 7783: 2011 von 12 auf.

Die Stabilität des Körpers bei Durchführung des Brandtests unter Beflammung der getränkten Fläche wurde mit gut bis sehr gut bewertet. Das mit unter Flammeneinwirkung intumeszierende Flammschutzmittel versetzte Polystyrol blieb als stabile Schicht bestehen. Es trat kein brennendes Abfallen oder Abtropfen auf. Im Kleinbrennerkasten nach DIN EN ISO 11925 wurden die Kriterien der Brandklassen E und D erfüllt.

### Referenzbeispiel

### Schritt a)

### Wie in Beispiel 1.

### Schritt b)

Es wurde kein Schritt b) durchgeführt.

Die Stabilität des Körpers bei Durchführung des Brandtests wurde mit ausreichend bewertet. Das unter Flammeneinwirkung intumeszierende Flammschutzmittel löste sich oberflächlich als schwebende Rußteilchen ab. Es trat kein brennendes Abtropfen auf, jedoch kam es zum unerwünschten Abfallen von abgebrannten Teilstücken aus dem Körper. Im Kleinbrennerkasten nach DIN EN ISO 11925 wurden die Kriterien der Brandklassen E und D erfüllt.

## Patentansprüche

1. Verfahren zur Herstellung eines Schall- und/oder Wärmedämmelements aus einem flammgeschützten Polymer-Partikelschaum, umfassend die Schritte:
a) Herstellen eines flammgeschützten Polymer-Partikelschaumkörpers unter Verwendung schäumbarer und/oder vorgeschäumter Polymer-Partikel, wobei die schäumbaren und/oder vorgeschäumten Polymer-Partikel vor einem Endschäumprozess zumindest teilweise mit einem organischen Bindemittel und einem Flammschutzmittel beschichtet werden und das organische Bindemittel durch Zugabe von Feuchtigkeit und/oder Wärme aktiviert wird, so dass ein die Polymer-Partikel zumindest teilweise umhüllender Bindemittelfilm ausgebildet wird, der zum Einen das Flammschutzmittel an die Polymer-Partikel bindet und zum Anderen die Expansion der Polymer-Partikel während des Endschäumprozesses verringert, so dass ein zusammenhängendes luftgefüllte Zwickelvolumen ausgebildet wird,
b) zumindest teilweises Beschichten der das Zwickelvolumen begrenzenden Oberflächen im Inneren des flammgeschützten Polymer-Partikelschaumkörpers mit einer ein anorganisches Bindemittel enthaltenden Beschichtungszusammensetzung, wobei das Beschichten mittels Tränken, Tunken, Tauchen, Fluten, Begießen und/oder Besprühen des flammgeschützten Polymer-Partikelschaumkörpers durchgeführt wird.

2. Verfahren nach Anspruch 1,
**dadurch gekennzeichnet, dass** in Schritt b) eine Beschichtungszusammensetzung in Form einer Flüssigkeit, insbesondere in Form einer Lösung, einer Dispersion, einer Suspension oder einer Emulsion, zum Beschichten verwendet wird.

3. Verfahren nach Anspruch 1 oder 2,
**dadurch gekennzeichnet, dass** in Schritt b) eine Beschichtungszusammensetzung zum Beschichten verwendet wird, die ein silikatisches Bindemittel, insbesondere Wasserglas, als anorganisches Bindemittel enthält.

4. Verfahren nach einem der vorhergehenden Ansprüche,
**dadurch gekennzeichnet, dass** in Schritt b) eine Beschichtungszusammensetzung zum Beschichten verwendet wird, die wenigstens ein Additiv, insbesondere ein Spreit-, Netz- und/oder Dispergiermittel, enthält.

5. Verfahren nach einem der vorhergehenden Ansprüche,
**dadurch gekennzeichnet, dass** das Beschichten in Schritt b) zumindest zeitweise unter Druck, bei Unterdruck oder im Vakuum erfolgt.

6. Verfahren nach einem der vorhergehenden Ansprüche,
**dadurch gekennzeichnet, dass** nach dem zumindest teilweise Beschichten der das Zwickelvolumen begrenzenden Oberflächen ein Teil der zum Beschichten eingesetzten Beschichtungszusammensetzung aus dem Zwickelvolumen, beispielsweise durch Abtropfen oder Abschleudern, wieder entfernt wird.

7. Verfahren nach einem der vorhergehenden Ansprüche,
**dadurch gekennzeichnet, dass** in Schritt a) schäumbare und/oder vorgeschäumte Polymer-Partikel aus Polystyrol, Polylactid, Polyethylen und/oder Polypropylen verwendet werden.

8. Verfahren nach einem der vorhergehenden Ansprüche,
**dadurch gekennzeichnet, dass** in Schritt a) ein Dispersionspulver, insbesondere ein Dispersionspulver auf Basis von Homo-, Co- oder Terpolymeren von Acrylaten, Styrolacrylat, Vinylacetat, Ethylen, Vinylversatat, Vinyllaurat, Alkylacrylaten und/oder Vinylchlorid, als organisches Bindemittel zum Beschichten der schäumbaren und/oder vorgeschäumten Polymer-Partikel verwendet wird.

9. Verfahren nach einem der vorhergehenden Ansprüche,
**dadurch gekennzeichnet, dass** in Schritt a) 25 bis 99,5 Gew.-%, vorzugsweise 40 bis 99 Gew.-%, weiterhin vorzugsweise 50 bis 98,5 Gew.-% schäumbare und/oder vorgeschäumte Polymer-Partikel und 0,5 bis 75 Gew.-%, vorzugsweise 1 bis 60 Gew.-%, weiterhin vorzugsweise 1,5 bis 50 Gew.-% Bindemittel bezogen auf das Gesamtgewicht der Ausgangsstoffe verwendet werden, wobei die Ausgangsstoffe ferner mindestens ein Flammschutzmittel beinhalten.

10. Verfahren nach einem der vorhergehenden Ansprüche,
**dadurch gekennzeichnet, dass** in Schritt a) ein intumeszierendes Flammschutzmittel, insbesondere Blähgraphit, zum Beschichten der schäumbaren und/oder vorgeschäumten Polymer-Partikel verwendet wird.

11. Verfahren nach einem der vorhergehenden Ansprüche,
**dadurch gekennzeichnet, dass** die schäumbaren und/oder vorgeschäumten Polymer-Partikel vor dem Beschichten mit dem organischen Bindemittel und dem Flammschutzmittel angefeuchtet werden oder feuchte Polymer-Partikel verwendet werden.

12. Verfahren nach einem der vorhergehenden Ansprüche,
**dadurch gekennzeichnet, dass** in Schritt a) die zur Aktivierung des Bindemittels erforderliche Feuchtigkeit und/oder Wärme bei einem Vor- oder Endschäumprozess, vorzugsweise in Form von Wasserdampf, zugegeben wird.

13. Schall- und/oder Wärmedämmelement aus einem flammgeschützten Polymer-Partikelschaum, der zwischen verschweißten und verklebten Polymer-Partikeln ein zusammenhängendes luftgefülltes Zwickelvolumen aufweist, das von Oberflächen begrenzt wird, die zumindest teilweise mit einer ein anorganisches Bindemittel enthaltenden Beschichtungszusammensetzung beschichtet sind, wobei das Schall-und/oder Wärmedämmelement nach einem Verfahren nach einem der Ansprüche 1 bis 12 hergestellt worden ist.

14. Schall- und/oder Wärmedämmelement nach Anspruch 13,
**dadurch gekennzeichnet, dass** zudem wenigstens eine außen liegende Oberfläche des Schall- und/oder Wärmedämmelements zumindest teilweise mit der Beschichtungszusammensetzung beschichtet ist.

## Claims

1. A method for producing a noise and/or heat insulation element formed from a flame-retardant polymer particle foam, comprising the following steps:
a) producing a flame-retardant polymer particle foam body using foamable and/or pre-foamed polymer particles, wherein the foamable and/or pre-foamed polymer particles are coated at least in part with an organic binder and a flame retardant before a final foaming process and the organic binder is activated by addition of moisture and/or heat, such that a binder film enveloping the polymer particles at least in part is formed, which binder film on the one hand binds the flame retardant to the polymer particles and on the other hand reduces the expansion of the polymer particles during the final foaming process, such that a continuous air-filled interstitial volume is formed,
b) at least partially coating the surfaces in the interior of the flame-retardant polymer particle foam body that delimit the interstitial volume with a coating composition containing an inorganic binder, wherein the coating is performed by means of saturation, dipping, immersion, flooding, perfusion and/or spraying of the flame-retardant polymer particle foam body.

2. The method according to claim 1,
**characterised in that** in step b) a coating composition in the form of a liquid, in particular in the form of a solution, a dispersion, a suspension or an emulsion, is used for the coating.

3. The method according to claim or 2,
**characterised in that** in step b) a coating composition which contains a siliceous binder, in particular waterglass, as inorganic binder is used for the coating.

4. The method according to any one of the preceding claims,
**characterised in that** in step b) a coating composition which contains at least one additive, in particular a spreading agent, wetting agent and/or dispersing agent, is used for the coating.

5. The method according to any one of the preceding claims,
**characterised in that** the coating in step b) is performed at least temporarily under pressure, at negative pressure, or in a vacuum.

6. The method according to any one of the preceding claims,
**characterised in that** after the at least partial coating of the surfaces delimiting the interstitial volume, some of the coating composition used for the coating is removed again from the interstitial volume, for example by draining off or by centrifugation.

7. The method according to any one of the preceding claims,
**characterised in that** in step a) foamable and/or pre-foamed polymer particles formed from polystyrene, polylactide, polyethylene and/or polypropylene are used.

8. The method according to any one of the preceding claims,
**characterised in that** in step a) a dispersion powder, in particular a dispersion powder based on homo-, co-or terpolymers of acrylates, styrene acrylate, vinyl acetate, ethylene, vinyl versatate, vinyl laurate, alkyl acrylates and/or vinyl chloride, is used as organic binder for coating the foamable and/or pre-foamed polymer particles.

9. The method according to any one of the preceding claims,
**characterised in that** in step a) 25 to 99.5 % by weight, preferably 40 to 99 % by weight, more preferably 50 to 98.5 % by weight of foamable and/or pre-foamed polymer particles and 0.5 to 75 % by weight, preferably 1 to 60 % by weight, more preferably 1.5 to 50 % by weight of binder are used in relation to the total weight of the starting materials, wherein the starting materials also contain at least one flame retardant.

10. The method according to any one of the preceding claims,
**characterised in that** in step a) an intumescent flame retardant, in particular expanded graphite, is used to coat the foamable and/or pre-foamed polymer particles.

11. The method according to any one of the preceding claims,
**characterised in that** the foamable and/or pre-foamed polymer particles are moistened prior to the coating with the organic binder and the flame retardant, or moist polymer particles are used.

12. The method according to any one of the preceding claims,
**characterised in that** in step a) the moisture and/or heat necessary to activate the binder are/is added in a pre-foaming or final foaming process, preferably in the form of steam.

13. A noise and/or heat insulation element formed from a flame-retardant polymer particle foam which has a continuous, air-filled interstitial volume between fused and bonded polymer particles, which interstitial gap is delimited by surfaces which are coated at least in part by a coating composition containing an inorganic binder, wherein the noise and/or heat insulation element has been produced in accordance with a method according to any one of claims 1 to 12.

14. The noise and/or heat insulation element according to claim 13,
**characterised in that** at least one outer surface of the noise and/or heat insulation element is additionally coated at least in part by the coating composition.

## Revendications

1. Procédé destiné à fabriquer un éléments insonorisant et/ou isolant thermique en une mousse de particules de polymère ignifugée, comprenant les étapes :
a) de la fabrication d'un corps en mousse de particules de polymère ignifugée en utilisant des particules de polymère expansibles et/ou pré-expansées, avant un processus d'expansion finale, les particules de polymère expansibles et/ou pré-expansées étant revêtues au moins partiellement d'un liant organique et d'un agent ignifuge et le liant organique étant activé par ajout d'humidité et/ou de chaleur, de sorte qu'il se forme un film de liant enrobant au moins partiellement les particules de polymère qui, d'une part lie le produit ignifuge aux particules de polymère et d'autre part réduit l'expansion des particules de polymère pendant le processus d'expansion finale, de sorte à créer un volume interstitiel cohérent rempli d'air,
b) de l'enduction au moins partielle des surfaces délimitant le volume interstitiel à l'intérieur du corps en mousse de particules de polymère ignifugé avec une composition d'enduction contenant un liant anorganique, l'enduction étant réalisée par imbibition, par trempage, par immersion, par injection, par arrosage et/ou par vaporisation du corps en mousse de particules de polymère ignifugé.

2. Procédé selon la revendication 1,
**caractérisé en ce que** dans l'étape b), on utilise pour l'enduction une composition d'enduction sous la forme d'un liquide, notamment sous la forme d'une solution, d'une dispersion, d'une suspension ou d'une émulsion.

3. Procédé selon la revendication 1 ou la revendication 2,
**caractérisé en ce que** dans l'étape b), on utilise pour l'enduction une composition d'enduction qui contient en tant que liant anorganique un liant silicieux, notamment du verre soluble.

4. Procédé selon l'une quelconque des revendications précédentes,
**caractérisé en ce que** dans l'étape b), on utilise pour l'enduction une composition d'enduction qui contient au moins un additif, notamment un agent d'étalement, un agent mouillant et/ou un agent de dispersion.

5. Procédé selon l'une quelconque des revendications précédentes,
**caractérisé en ce que** dans l'étape b), l'enduction est effectuée au moins temporairement sous pression, sous dépression ou sous vide.

6. Procédé selon l'une quelconque des revendications précédentes,
**caractérisé en ce qu'**après l'enduction au moins partielle des surfaces délimitant le volume interstitiel, on ré-élimine du volume interstitiel une partie de la composition d'enduction mise en oeuvre pour l'enduction, par exemple par égouttage ou par essorage.

7. Procédé selon l'une quelconque des revendications précédentes,
**caractérisé en ce que** dans l'étape a) on utilise des particules de polymère expansibles et/ou pré-expansées en polystyrène, en polylactide, en polyéthylène et/ou en polypropylène.

8. Procédé selon l'une quelconque des revendications précédentes,
**caractérisé en ce que** dans l'étape a), on utilise une poudre de dispersion, notamment une poudre de dispersion sur base d'homopolymères, de copolymères ou de terpolymères d'acrylates, de styrène acrylate, de vinylacétate, d'éthylène, de versatate vinylique, de laurate vinylique, d'acrylates d'alkyle et/ou de chlorure de vinyle en tant que liant organique pour l'enduction des particules de polymère expansibles et/ou pré-expansées.

9. Procédé selon l'une quelconque des revendications précédentes,
**caractérisé en ce que** dans l'étape a), on utilise de 25 à 99,5 % en poids, de préférence de 40 à 99 % en poids, de manière plus préférentielle, de 50 à 98,5 % en poids de particules de polymère expansibles et/ou pré-expansées et de 0,5 à 75 % en poids, de préférence de 1 à 60 % en poids, de manière plus préférentielle, de 1,5 à 50 % en poids de liant, en rapport au poids total des matières de départ, les matières de départ contenant en outre au moins un agent ignifuge.

10. Procédé selon l'une quelconque des revendications précédentes,
**caractérisé en ce que** dans l'étape a), on utilise un agent ignifuge intumescent, notamment du graphite expansé pour enduire les particules de polymère expansibles et/ou pré-expansées.

11. Procédé selon l'une quelconque des revendications précédentes,
**caractérisé en ce qu'**avant l'enduction avec le liant organique et l'agent ignifuge, on humidifie les particules de polymère expansibles et/ou pré-expansées ou **en ce qu'**on utilise des particules de polymère humides.

12. Procédé selon l'une quelconque des revendications précédentes,
**caractérisé en ce que** dans l'étape a), on ajoute l'humidité et/ou la chaleur nécessaire pour l'activation du liant lors d'un processus de pré-expansion ou d'expansion finale, de préférence sous la forme de vapeur d'eau.

13. Élément insonorisant et/ou isolant thermique en une mousse de particules de polymère ignifugée, qui entre des particules de polymère soudées et collées comporte un volume interstitiel cohérent rempli d'air qui est délimité par des surfaces qui sont enduites au moins partiellement d'une composition d'enduction contenant un liant anorganique, l'élément insonorisant et/ou isolant thermique ayant été fabriqué d'après un procédé selon l'une quelconque des revendications 1 à 12.

14. Élément insonorisant et/ou isolant thermique selon la revendication 13,
**caractérisé en ce qu'**en supplément, une surface extérieure de l'élément insonorisant et/ou isolant thermique est enduite au moins partiellement avec la composition d'enduction.
